# EUROPÄISCHE PATENTANMELDUNG

(11) **EP 1 083 096 A2**
(43) Veröffentlichungstag der Anmeldung: **14.03.2001**
(21) Anmeldenummer: 00119074.3
(22) Anmeldetag: 02.09.2000
(51) Int. Cl.: B60R 16/02

(54) **Steuereinrichtung zur benutzerspezifischen Einstellung von Einrichtungen in einem Kraftfahrzeug**

(30) Priorität: 10.09.1999 DE 19943484
(71) Anmelder: Hella KG Hueck & Co., 59552 Lippstadt (DE)
(72) Erfinder: Reimann, Martin, 59701 Hamm (DE); Schriek, Josef, 59556 Lippstadt (DE)

(57) **Zusammenfassung**

Beschrieben wird eine Steuereinrichtung zur benutzerspezifischen Einstellung von Einrichtungen in einem Kraftfahrzeug anhand von schlüsselspezifisch gespeicherten Benutzerdaten, wobei die Steuereinrichtung anhand von den Benutzern zugeordneten Identifizierungskarten die an den Sitzpositionen im Kraftfahrzeug befindlichen Benutzer erkennt.

Das Steuersystem zeichnet sich durch große Variabilität und hohen Komfort aus. Statt wie bisher nur fahrerbezogener Einstellungen erlaubt das erfindungsgemäße Steuersystem die personenspezifische Wahl von Sitzpositionen, Klimatisierung oder multimedialer Unterhaltung. Dieses wird durch eine platzbezogene Identifizierung möglich.

## Beschreibung

Die Erfindung betrifft eine Steuereinrichtung zur benutzerspezifischen Einstellung von Einrichtungen in einem Kraftfahrzeug anhand von schlüsselspezifisch gespeicherten Benutzerdaten.

Eine solche Einrichtung ist z. B. aus der DE 38 17 495 C2 bekannt. Diese bekannte Einrichtung berücksichtigt jedoch jeweils nur die ergonomischen Verhältnisse am Fahrerplatz, nicht jedoch die Bedürfnisse des oder der Mitfahrer.

Es ist daher die Aufgabe der Erfindung ein Steuersystem zu schaffen, daß auch den Bedürfnissen des oder der Mitfahrer Rechnung trägt. Es soll zudem möglichst einfach und komfortabel in der Bedienung sein; vorzugsweise soll es seine Funktion vollautomatisch erfüllen.

Diese Aufgabe wird erfindungsgemäß dadurch gelöst, daß die Steuereinrichtung anhand von den Benutzern zugeordneten Identifizierungsmitteln die an den Sitzpositionen im Kraftfahrzeug befindlichen Benutzer erkennt.

In der folgenden Erläuterung werden die Identifizierungsmittel ohne Beschränkung der Allgemeinheit als Identifizierungskarten angesprochen, da diese eine besonders vorteilhafte Ausführungsform eines Identifizierungsmittels darstellen. Die körperliche Ausgestaltung des Identifizierungsmittels ist selbstverständlich nicht auf die Form einer Karte beschränkt.

Das erfindungsgemäße Steuersystem kann an Hand der Kennung der Identifizierungskarten im Fahrzeuginneren die Platzposition jeder Person mittels der mitgeführten Identifizierungskarte ermitteln.

Im Steuersystem selbst sind die kartenbezogene Informationen für die unterschiedlichen Funktionen, wie z. B. Sitzverstellung, Klimaanlage oder Radio abgelegt. Die Informationen werden nach eindeutiger Personen(Identifizierungskarten)/Sitzplatzzuordnung an die entsprechenden Steuergeräte übertragen. Hierzu sind im Steuersystem nur die Kennungen der Identifizierungskarten abgelegt. Die individuellen Daten liegen in den entsprechenden Steuergeräten vor. Das Steuersystem überträgt nach der Zuordnung die Kennung der Identifizierungskarte an die entsprechenden Steuergeräte. Die Steuergeräte wiederum stellen ihre Aktuatoren den personenbezogenen Daten entsprechend ein. Das Übertragungsmedium kann eine direkte, verdrahtete Datenleitung sein oder in vernetzten Fahrzeugen, das vorhandene Bussystem. Auch drahtlose Übertragungsmedien sind möglich.

Der Vorteil dieser Erfindung besteht in der sitzplatzbezogenen Speicher- und Auswertefunktion. Das bedeutet Komfortgewinn nicht nur für den Fahrer, sondern für alle im Besitz einer gültigen Identifizierungskarte befindlichen Mitfahrer. Die Bedienung dieses Systems ist unter anderem deshalb so einfach, weil sie unbemerkt erfolgt.

Bei freier Platzwahl im Kraftfahrzeug erkennt das Steuersystem über Antennen anhand der dem jeweiligen Benutzer zugeordneten und mitgeführten Identifizierungskarte (deren Funktion z. B. auch in Form eines Schlüssels realisiert sein kann), an welcher Stelle im Fahrzeug die Benutzer Platz genommen haben und realisisiert an der entsprechenden Position die zuvor auf die Identifizierungskarten, und damit auf die Benutzer bezogenen gespeicherten Einstellungen.

Beispiele hierfür sind: Sitzpositionseinstellungen auf allen Plätzen, Spiegeleinstellungen, Temperatureinstellungen (rechts, links, vorne, hinten, ggf. gemittelte Werte), bei Bedarf automatisches Verriegeln der dem Fahrer/Mitfahrer zugeordneten Tür (während der Fahrt, bei Fahrzeugstop, beim Verlassen des Fahrzeugs), kartenbezogene Getriebeeinstellungen (sportlich, ökonomisch, etc.) auf die auf dem Fahrersitz befindliche Person bezogen, dito mögliche Anpassungen von Pedalcharakteristika bei E-Gas, E-Bremse o.ä., Nutzung einer im Kindersitz integrierten Identifizierungskarte zur Deaktivierung von Systemen (z.B. Airbags), Einstellungen von Audio- und Videosystemen; letztlich alle erdenklichen, auch zukünftigen fahrzeugseitig (extern wie intern) oder sitzplatzbezogenen bedien- und einstellbaren Systeme und Servoantriebe.

## Patentansprüche

1. Steuereinrichtung zur benutzerspezifischen Einstellung von Einrichtungen in einem Kraftfahrzeug anhand von schlüsselspezifisch gespeicherten Benutzerdaten,
**dadurch gekennzeichnet,**
daß die Steuereinrichtung anhand von den Benutzern zugeordneten Identifizierungsmitteln die an den Sitzpositionen im Kraftfahrzeug befindlichen Benutzer erkennt.

2. Steuereinrichtung nach Anspruch 1, dadurch gekennzeichnet, daß die Identifizierungsmittel als batteriebetriebene Chipkarten oder als Transponderkarten ausgeführt sind.

3. Steuereinrichtung nach Anspruch 1, dadurch gekennzeichnet, daß die Steuereinrichtung an jeder Sitzposition des Kraftfahrzeugs eine Vorrichtung zur Erkennung eines Benutzer aufweist.

4. Steuereinrichtung nach Anspruch 1, dadurch gekennzeichnet, daß die Steuereinrichtung den erkannten Benutzern zugeordnete, als benutzerspezifisch gespeicherte Einstellungen an Einrichtungen des Kraftfahrzeugs vornimmt.

5. Steuereinrichtung nach Anspruch 4, dadurch gekennzeichnet, daß die benutzerspezifischen Einstellungen die Positionierung der Fahrzeugsitze umfaßt.

6. Steuereinrichtung nach Anspruch 4, dadurch gekennzeichnet, daß die benutzerspezifischen Einstellungen die Positionierung eines Fahrzeugspiegels umfaßt.

7. Steuereinrichtung nach Anspruch 4, dadurch gekennzeichnet, daß die benutzerspezifischen Einstellungen die Temperatureinstellung einer Klimaanlage umfaßt.

8. Steuereinrichtung nach Anspruch 4, dadurch gekennzeichnet; daß die benutzerspezifischen Einstellungen die Einstellungen von Audio- und Videosystemen umfaßt.
